Europäisches Patentamt

**European Patent Office**

Office européen des brevets

(1) Veröffentlichungsnummer: **0 291 967**
**A1**

# EUROPÄISCHE PATENTANMELDUNG

(21) Anmeldenummer: 88107996.6

(22) Anmeldetag: 19.05.88

(51) Int. Cl.4: **B29C 63/06 , B65D 39/08**

(30) Priorität: 21.05.87 CH 1968/87

(43) Veröffentlichungstag der Anmeldung:
23.11.88 Patentblatt 88/47

(84) Benannte Vertragsstaaten:
**AT DE GB IT**

(71) Anmelder: **Starlinger-Huemer, Franz X.**
**Sonnenuhrgasse 4**
**A-1060 Wien(AT)**

(72) Erfinder: **Starlinger-Huemer, Franz X.**
**Sonnenuhrgasse 4**
**A-1060 Wien(AT)**

(74) Vertreter: **Petschner, Goetz**
**Patentanwaltsbüro G. Petschner**
**Seidengasse 18**
**CH-8001 Zürich(CH)**

(54) Verfahren zur Erzeugung eines rohrförmigen Halbfabrikates für die Herstellung von Container-Säcken.

(57) Beim Verfahren zur Erzeugung eines rohrförmigen Halbfabrikates für die Herstellung von Verpackungssäcken o.dgl., bei welchem mindestens ein rohrförmiger, folienartiger Mantel (1) aus einem Kunststoff mit mindestens teilweise aus einem Kunststoff bestehende Folienbändchen (2) mindestens in seiner Umfangsrichtung armiert wird, wird der rohrförmige, folienartige Mantel (1) durch einzelne, in Mantellängsrichtung mit vorgegebenem Abstand nebeneinander oder auf Stoss verlaufende, bezüglich den Folienbändchen (2) der Armierung gleiche oder unterschiedliche Breite aufweisende Folienbändchen (3) gebildet, an welchen dann die der Armierung dienenden Folienbändchen (2) zur Anlage gebracht werden, worauf die Bändchen (2) der Armierung und die Bändchen (3) des Mantels miteinander verschweisst oder verklebt werden.

Durch diese Massnahmen ist es zunächst möglich, ein solches rohrförmiges Halbfabrikat fern von Extrusionsanlagen herzustellen. Die Porösität resp. Dichtheit des Containers und somit ein angepasster Materialverbrauch ist zudem durch die Wahl des Abstandes zwischen den einzelnen längsverlaufenden, den Mantel bildenden Folienbändchen vorbestimmbar.

## Verfahren zur Erzeugung eines rohrförmigen Halbfabrikates für die Herstellung von Container-Säcken

Die vorliegende Erfindung betrifft ein Verfahren zur Erzeugung eines rohrförmigen Halbfabrikates für die Herstellung von Verpackungssäcken o. dgl., bei welchem mindestens ein rohrförmiger, folienartiger Mantel aus einem Kunststoff mit mindestens teilweise aus einem Kunststoff bestehende Folienbändchen mindestens in seiner Umfangsrichtung armiert wird.

Neben von auf Rundwebmaschinen aus Kunststoffbändchen hergestellten rohrförmigen Halbfabrikaten werden auch auf Extrusionsanlagen aus einem weichgemachten Thermoplast erzeugte rohrförmige Kunststoff-Folien zur Herstellung von Verpakkungssäcken, grossvolumigen Containersäcken und dgl. Behältnisse herangezogen.

Um dabei die für solche Behältnisse erforderliche Tragfestigkeit zu erzielen, wurden die von der Herstellung von Schläu chen bekannten Armierungstechniken im wesentlichen übernommen.

Entsprechend ist es bei neueren Verfahren üblich, eine extrudierte Schlauchfolie aus thermoplastischem Kunststoff direkt nach dem Extrudieren mit Folienbändchen aus Kunststoff beispielsweise in Umfangsrichtung spiralförmig zu armieren.

Unter dem Gesichtspunkt, dass solche Verfahren der Massenherstellung von Endprodukten dienen, ergeben sich einige Nachteile bezüglich Fabrikation, Materialverbrauch und Verwendbarkeit.

So lassen sich nicht überall Extrusionseinrichtung und Bändchen-Verlegeeinrichtung gleichen Orts unterbringen. Ferner erfordert das Extrudieren der Schlauchfolie eine zwangsläufige Wandungsdicke, obwohl von der Gebrauchsfestigkeit solcher Endprodukte her die Wandungsstärke der Schlauchfolie um einiges geringer sein könnte. Ferner sind solche Container-Säcke für jene Vielzahl von Produkten ungeeignet, die einer porösen Verpackung bedürfen.

Es ist somit Aufgabe der vorliegenden Erfindung, ein Verfahren zur Erzeugung eines rohrförmigen Halbfabrikates für die Herstellung von Container-Säcken u.dgl. so auszugestalten, dass es sich u.a. auch örtlich entfernt von Extrusionsanla gen durchführen lässt; dass es eine Anpassung des Materialverbrauches an die tatsächlichen Erfordernisse erlaubt und dass es gestattet, Container-Säcke herzustellen, die einen vorbestimmbaren Luftdurchtritt gewährleisten.

Dies wird erfindungsgemäss dadurch erreicht, dass der rohrförmige, folienartige Mantel durch einzelne, in Mantellängsrichtung mit vorgegebenem Abstand nebeneinander oder auf Stoss verlaufende, bezüglich den Folienbändchen der Armierung gleiche oder unterschiedliche Breite aufweisende Folienbändchen gebildet wird, an welchen dann die der Armierung dienenden Folienbändchen zur Anlage gebracht werden, worauf die Bändchen der Armierung und die Bändchen des Mantels miteinander verschweisst oder verklebt werden.

Durch diese Massnahmen ist es zunächst möglich, ein solches rohrförmiges Halbfabrikat fern von Extrusionsanlagen herzustellen. Die Porösität resp. Dichtheit des Containers und somit ein angepasster Materialverbrauch ist zudem durch die Wahl des Abstandes zwischen den einzelnen längsverlaufenden, den Mantel bildenden Folienbändchen vorbestimmbar.

Für eine billige Herstellung sowie für eine entsprechende Tragfähigkeit solcher Container ist es zudem zweckmässig, wenn die Bändchen der Armierung resp. des Mantels aus einer in Streifen geschnittenen Folie gebildet und zur Erhöhung der Zugfestigkeit monoaxial verstreckt werden.

Alternativ können aber auch zumindest die den Mantel bildenden Bändchen aus Monofilamente, Multifilamente oder Stapelfasern gebildet werden, was die Durchführbarkeit des erfindungsgemässen Verfahrens universeller macht.

Um die Bändchen der Armierung mit jenen des Mantels unter dem Gesichtspunkt einer Massenfabrikation wirksam und rasch verbinden zu können, ist es vorteilhaft, wenn die einen und/ oder anderen Bändchen und/oder die die Bändchen ergebenden Folien mit Klebstoff beschichtet werden, der bei späterer Erwärmung zur Verklebung des Ganzen abbindet.

Letztere können dabei schon in der Folien-Herstellungsphase durch Koextrusion mit diesem Klebstoff beschichtet werden.

Alternativ ist es aber auch möglich und oft auch zweckmässig, dass der Klebstoffauftrag unmittelbar vor der Bildung und Armierung des rohrförmigen, folienartigen Mantels durchgeführt wird.

Um solche Container auch für insbesondere hygroskopische Güter geeignet zu machen, ist es für diese Anwendungsbereiche vorgesehen, dass die einen Mantel bildenden, in Mantellängsrichtung verlaufenden Folienbändchen auf einen ein- oder mehrschichtigen Innenmantel aufgebracht werden.

Ein solcher Innenmantel kann dabei aus beliebigen Materialien, u.a. Papier, Staniol, Kunststoff oder Verbundfolien davon, bestehen.

Für die Aufbringung der Bändchen auf diesen Innenmantel ist es von Vorteil, wenn der Innenmantel aufgeblasen und im Bereich der Aufbringung der Bändchen für den Mantel sowie der Armierungsbändchen zwischen zwei voneinander axial distanzierte äussere Kalibrierungsringe geführt wird.

Ohne einen solchen Innenmantel hingegen ist es von Vorteil, wenn die Bändchen des Mantels bis zur Fertigstellung des Halbfabrikates mittels Hilfsrohr abgestützt werden.

Weiter betrifft die vorliegende Erfindung ein Behältnis, hergestellt nach dem erfindungsgemässen Verfahren.

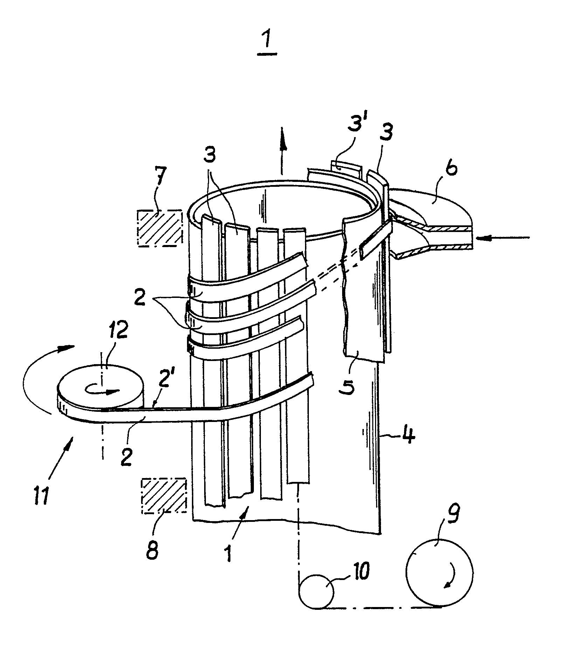

Beispielsweise Ausführungsformen einer Einrichtung zur Durchführung des erfindungsgemässen Verfahrens bzw. eines nach diesem Verfahren hergestellten Halbfabrikates, sind nachfolgend anhand der Zeichnung, welche in schematischer, - schaubildartiger Darstellung Varianten eines der Herstellung von Behältnissen dienendes, nach dem erfindungsgemässen Verfahren erzeugtes Halbfabrikat sowie in angedeuteter Form Ein richtungsmittel zur Durchführung des erfindungsgemässen Verfahrens zur Erzeugung des Halbfabrikates zeigen, näher erläutert.

Zur Erläuterung des erfindungsgemässen Verfahrens zur Erzeugung eines rohrförmigen Halbfabrikates, welches die Herstellung von Verpackungssäcken, grossvolumigen Containersäcken oder dgl. gestattet, sei zunächst auf das veranschaulichte Halbfabrikat verwiesen, an welchem in unterschiedlichen Bereichen Varianten im strukturellen Aufbau dargestellt sind.

Ausgegangen wird von einem rohrförmigen, folienartigen Mantel 1, der erfindungsgemäss durch einzelne, in Mantellängsrichtung mit vorgegebenem Abstand nebeneinander oder auf Stoss verlaufende, bezüglich den Folienbändchen 2 einer Armierung gleiche oder unterschiedliche Breite aufweisende Folienbändchen 3 gebildet wird, an welchen dann die der Armierung dienenden Folienbändchen 2 zur Anlage gebracht werden, worauf die Bändchen 2 der Armierung und die Bändchen 3 des Mantels miteinander verschweisst, hier vorzugsweise verklebt werden.

Beispielsweise kann die Anordnung aber auch so sein, dass die den Mantel 1 bildenden, in Mantellängsrichtung verlaufenden Folienbändchen 3 auf einen Innenmantel 5 aufgebracht werden, an welche Folienbändchen 3 dann wieder die der Armierung dienenden Folienbändchen 2 zur Anlage gebracht und das Ganze miteinander verbunden wird.

Wie angedeutet, können dabei die Folienbändchen 3 für den Mantel 1 von Vorratsmitteln 9 über Umlenkrollen 10 an ein stützendes Hilfsrohr 4 oder an den Innenmantel 5 angelegt werden.

Die der Armierung dienenden Bändchen 2 werden dann mittels einer, beispielsweise im Uhrzeigersinn umlaufend angetriebenen Bändchenverlegevorrichtung 11 an den Mantel 1 angelegt, wobei die Bändchen 2 von Vorratsspulenmittel 12 abgezogen werden.

Ebenso kann der Innenmantel 5 von nicht näher gezeigten Vorratsspulenmitteln oder direkt von einer Extrusionseinrichtung her zugeführt werden.

Um sowohl die Bändchen 3 an den genannten Innenmantel 5 und dann die Armierungsbändchen 2 anlegen zu können, kann alternativ und unter Verzicht auf das Stützrohr 4 der Innenmantel 5 aufgeblasen und im Bereich der Aufbringung der Bändchen 3 für den Mantel 1 sowie der Armierungsbändchen 2 zwischen zwei voneinander axial distanzierte äussere Kalibrierungsringe 7 und 8 geführt werden.

Für die Verklebung gegebenenfalls Verschweissung der Bändchen untereinander und gegebenenfalls mit dem Innenmantel kann eine Infrarotquelle oder eine Heissluftzuführung 6 dienen.

Entsprechend werden die Bändchen 2 und/oder 3 und/oder eine die Bändchen ergebende Folie mit einem Klebstoff beschichtet, welche Beschichtung 2' und/oder 3' bei der späteren Erwärmung durch die genannte Quelle 6 abbindet.

Eine die Bändchen ergebende Folie (die hier nicht näher gezeigt ist, kann dabei bereits durch Koextrusion mit einem Klebstoff beschichtet werden oder der Klebstoffauftrag kann unmittelbar vor der Bildung und Armierung des rohrförmigen, folienartigen Mantels durchgeführt werden.

Wie bereits erwähnt, können die Bändchen 2 und 3 der Armierung resp. des Mantels aus einer in Streifen geschnittenen Folie gebildet und zur Erhöhung der Zugfestigkeit monoaxial verstreckt werden.

Weiter können zumindest die den Mantel 1 bildenden Bändchen 3 aus Monofilamente, Multifilamente oder Stapelfasern gebildet werden.

Wie ohne weiteres erkennbar, gestattet eine solche Einrich tung die Durchführung aller vorbeschriebenen Verfahrensschritte einzeln oder miteinander.

Der Abzug des so erzeugten Halbfabrikates erfolgt kontinuierlich und in üblicher Weise, wofür das erzeugte Rundgebilde vorzugsweise zwischen nicht näher gezeigten Abzugswalzen zusammengelegt und von diesen weitergeführt wird, etwa direkt zu einer Konfektionsmaschine oder dgl.

Selbstverständlich sind im Rahmen des vorbeschriebenen Verfahrens und der Einrichtung eine Reihe von Modifikationen denkbar, ohne dabei den Erfindungsgedanken zu verlassen.

Wesentlich ist, dass der rohrförmige, folienartige Mantel durch die in Mantellängsrichtung verlaufenden Bändchen gebildet und diese dann armiert werden. Der Abstand der Mantel-Bändchen untereinander bildet dann ein Mass für Dichtheit und Tragfähigkeit des Containers. Wesentlich ist ferner, dass das Ganze auch auf einen Innenmantel aufgebracht werden kann, um Container für hygroskopische Güter oder mit Isolier- oder Lichtschutz-Effekt zu erhalten. Entsprechend kann der Innenmantel aus beliebigem Material, wie Papier oder auch aus Verbundmaterialien bestehen.

Beim Abziehen der zu ummantelnden und zu armierenden Innenfolie von einer Vorratsrolle ist der Vorteil gegeben, dass jederzeit für einen Spulenwechsel für die Längsbändchen resp. an der Verlegervorrichtung für die Armierungsbändchen die Fabrikation unterbrochen werden kann, was beim Ummanteln und Armieren unmittelbar nach einem Extrudieren der Innenfolie schwieriger ist.

In jedem Falle kann das erfindungsgemässe Verfahren kontinuierlich oder diskontinuierlich ablaufen.

Weiter ist es auch möglich, die äussere Wandung des Innenmantels 5 anstelle oder zusätzlich den Bändchen 2 und/oder 3 mit Klebstoff zu beschichten.

## Ansprüche

1. Verfahren zur Erzeugung eines rohrförmigen Halbfabrikates für die Herstellung von Verpackungssäcken o. dgl., bei welchem mindestens ein rohrförmiger, folienartiger Mantel aus einem Kunststoff mit mindestens teilweise aus einem Kunststoff bestehende Folienbändchen mindestens in seiner Umfangsrichtung armiert wird, dadurch gekennzeichnet, dass der rohrförmige, folienartige Mantel (1) durch einzelne, in Mantellängsrichtung mit vorgegebenem Abstand nebeneinander oder auf Stoss verlaufende, bezüglich den Folienbändchen (2) der Armierung gleiche oder unterschiedliche Breite aufweisende Folienbändchen (3) gebildet wird, an welchen dann die der Armierung dienenden Folienbändchen (2) zur Anlage gebracht werden, worauf die Bändchen (2) der Armierung und die Bändchen (3) des Mantels miteinander verschweisst oder verklebt werden.

2. Verfahren nach Anspruch 1, dadurch gekennzeichnet, dass die Bändchen (2 und 3) der Armierung resp. des Mantels aus einer in Streifen geschnittenen Folie gebildet und zur Erhöhung der Zugfestigkeit monoaxial verstreckt werden.

3. Verfahren nach Anspruch 1, dadurch gekennzeichnet, dass zumindest die den Mantel (1) bildenden Bändchen (3) aus Monofilamente, Multifilamente oder Stapelfasern gebildet werden.

4. Verfahren nach einem der Ansprüche 1 bis 3, dadurch gekennzeichnet, dass die Bändchen (2 und/oder 3) und/oder die die Bändchen ergebende Folie mit Klebstoff beschichtet werden, der bei späterer Erwärmung zur Verklebung des Ganzen abbindet.

5. Verfahren nach einem der Ansprüche 1 bis 3, dadurch gekennzeichnet, dass die die Bändchen (2 und/oder 3) ergebende Folie durch Koextrusion mit einem Klebstoff beschichtet wird, um Bändchen (2 und/oder 3) mit einer Klebstoffschicht (2′ resp. 3′) zu erhalten, die bei späterer Erwärmung zur Verklebung des Ganzen abbindet.

6. Verfahren nach Anspruch 4, dadurch gekennzeichnet, dass der Klebstoffauftrag unmittelbar vor der Bildung und Armierung des rohrförmigen, folienartigen Mantels (1) durchgeführt wird.

7. Verfahren nach Anspruch 1, dadurch gekennzeichnet, dass die einen Mantel (1) bildenden, in Mantellängsrichtung verlaufenden Folienbändchen (3) auf einen ein- oder mehrschichtigen Innenmantel (5) aufgebracht werden, der gegebenenfalls aussen mit einem Klebstoff beschichtet ist.

8. Verfahren nach Anspruch 7, dadurch gekennzeichnet, dass der Innenmantel (5) aufgeblasen und im Bereich der Aufbringung der Bändchen (3) für den Mantel (1) sowie der Armierungsbändchen (2) zwischen zwei voneinander axial distanzierte äussere Kalibrierungsringe (7,8) geführt wird.

9. Verfahren nach Anspruch 1, dadurch gekennzeichnet, dass die Bändchen (3) des Mantels (1) bis zur Fertigstellung des Halbfabrikates mittels Hilfsrohr (4) abgestützt werden.

10. Behältnis, hergestellt nach dem Verfahren nach den Ansprüchen 1 bis 9.

0 291 967

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 196 492 (HUEMER)<br>* Seite 1; Seite 2, Absatz 1; Seite 10, Absätze 3,4; Figur 1 *<br>--- | 1-10 | B 29 C 63/06<br>B 65 D 30/08 |
| Y | US-A-3 788 199 (SATO et al.)<br>* Spalte 1, Zeilen 6-8; Spalte 3, Zeile 64 - Spalte 4, Zeile 5; Spalte 6, Zeilen 17-33; Spalte 7, Zeilen 41-56; Spalte 8, Zeilen 52-55; Figuren 5,9,15 *<br>----- | 1-10 | |

RECHERCHIERTE
SACHGEBIETE (Int. Cl.4)

B 29 C

Der vorliegende Recherchenbericht wurde für alle Patentansprüche erstellt

| Recherchenort | Abschlußdatum der Recherche | Prüfer |
|---|---|---|
| DEN HAAG | 29-07-1988 | KUHN E.F.E. |